Europäisches Patentamt

European Patent Office

Office européen des brevets

(11) Publication number: **0 371 932**
**A2**

# EUROPEAN PATENT APPLICATION

(21) Application number: **89830524.8**

(51) Int. Cl.5: **B60T 8/32**

(22) Date of filing: **28.11.89**

(30) Priority: **30.11.88 IT 6807488**

(43) Date of publication of application:
**06.06.90 Bulletin 90/23**

(84) Designated Contracting States:
**AT BE CH DE ES FR GB GR IT LI LU NL SE**

(71) Applicant: **MARELLI AUTRONICA S.p.A.**
**Piazza Sant'Ambrogio, 6**
**I-20123 Milano(IT)**

(72) Inventor: **Cotignoli, Guiseppe**
**Corso Francia 70**
**I-10093 Collegno (Tornino)(IT)**
Inventor: **Lattanzio, Stefano**
**Via Buenos Aires 92/d**
**I-10137 Torino(IT)**

(74) Representative: **Quinterno, Giuseppe et al**
**c/o Jacobacci-Casetta & Perani S.p.A. Via**
**Alfieri, 17**
**I-10121 Torino(IT)**

(54) **An anti-lock braking system for motor vehicles.**

(57) The system includes sensors (w) which provide signals indicative of the rate of rotation of at least one monitored wheel of the motor vehicle and electrically-controlled fluid actuators (4-9) for increasing and reducing the braking pressure applied to the braking elements of the vehicle. An electronic processing and control unit (30) connected to the sensors(W) and is arranged to pilot the actuators (4-9) in conditions of incipient locking of the wheels so as to bring about one or more cycles of anti-lock braking. In each of these cycles, the unit (10) causes in succession:
a controlled reduction of the braking pressure when the at least one monitored wheel is in a condition of incipient locking,
the holding of the pressure at a constant value until the acceleration of the monitored wheel exceeds a minimum positive threshold, and
the increase of the braking pressure again.

During the stage in which the braking pressure is increased again in each cycle after the first, the electronic unit (10) causes in particular:
an initial pressure increase of an amount calculated on the basis of the total increase in the previous cycle and the durations of the last and penultimate periods of controlled reduction of the braking pressure, and
a subsequent, slower increase in the braking pressure.

FIG. 1

## An anti-lock braking system for motor vehicles

The present invention relates to an anti-lock braking system for motor vehicles.

More specifically, the subject of the invention is a system of the type comprising:

sensor means for providing electrical signals indicative of the rate of rotation of at least one monitored wheel of the motor vehicle,

electrically-controlled fluid actuator means for increasing and reducing the braking pressure applied to the braking elements of the vehicle, and

an electronic processing and control unit which is connected to the sensor means and causes one or more cycles of anti-lock braking when the at least one monitored wheel is in conditions of incipient locking, the unit causing in succession, in each of the cycles:

- a controlled reduction of the braking pressure as soon as the at least one monitored wheel is in a condition of incipient locking,

- the holding of the braking pressure at a constant value until the acceleration of the wheel exceeds a minimum positive threshold, and

- the increase of the braking pressure again according to a predetermined temporal law.

Systems are known in which the braking pressure is increased again, during each cycle of anti-lock braking, according to a temporal law with stepped increments of constant amplitude and frequency. In these systems, the selection of the values of the amplitude and frequency of the pressure steps is quite critical. If the size and frequency of the pressure steps are too great, the braking pressure increases very quickly and there is too rapid a succession of incipient wheel-locking situations. However, if the size and frequency of the pressure steps are too small, the braking pressure increases slowly and the wheels are generally braked less than they actually could be without causing the wheels to start locking again.

The object of the present invention is to provide a system which overcomes these problems and therefore enables the optimum re-application of the braking pressure to the wheels.

According to the invention, this object is achieved by means of an anti-lock braking system of the type specified above, whose main characteristic lies in the fact that the electronic processing and control unit is arranged to cause, during the stage in which the braking pressure is increased again in each cycle after the first:

an initial, rapid pressure increase of an amount calculated on the basis of the total increase achieved in the preceding cycle and on the durations of the last and penultimate periods of controlled pressure reduction, and

a subsequent, slower increase in the braking pressure.

According to a further characteristic of the invention, in a braking system in which the processing and control unit is arranged to increase the braking pressure again, in each cycle, according to a temporal law with stepped increments, the unit is arranged so that, starting from the second cycle of intervention, it brings about during the stage in which the braking pressure is increased again:

an initial number of pressure steps equal to a predetermined fraction falling between 50 and 100% of the number obtained by multiplying the total number of pressure steps in the preceding cycle by the ratio between the duration of the last period of reduction of the braking pressure and the duration of the penultimate period of reduction of the pressure, and

a subsequent number of pressure steps of a size substantially equal to that of the preceding ones but at a lower frequency.

Further characteristics and advantages of the invention will become clear from the detailed description which follows with reference to the appended drawings, provided by way of non-limiting example, in which:

Figure 1 is a diagram which shows an anti-lock braking system according to the invention,

Figure 2 is a graph which shows, by way of example, a curve of the braking pressure applied to the wheels of a motor vehicle provided with an anti-lock braking system according to the prior art, as a function of the time t shown on the abscissa,

Figure 3 is a graph similar to that of Figure 2, and

Figure 4 is a graph which shows, by way of example, a curve of the braking pressure applied to the wheels of a motor vehicle by the anti-lock braking system according to the invention, as a function of time.

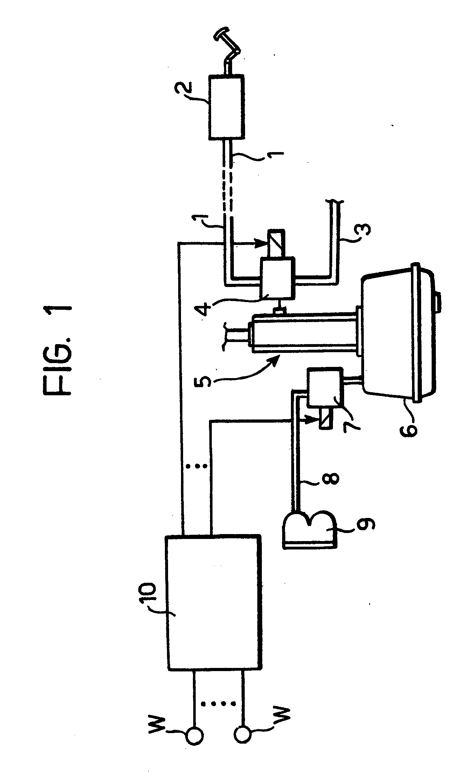

Figure 1 shows shcematically part of an anti-lock braking system. This is a braking system which, as regards its structure and general operating criteria, has already been proposed in the past, for example, in the previous German patent application No. P 3705897.5 in the name of the same Applicant. For this reason, only that which is necessary for an understanding of the invention will be repeated below.

In the diagram of Figure 1, a pipe, indicated 1, is connected to a source of pressurised braking-fluid constituted, in the embodiment illustrated, by the master cylinder 2 of the braking system of the motor vehicle. A pipe through which the fluid braking pressure can be transmitted to the braking members (not shown) associated with the wheels of the motor vehicle is indicated 3.

The passage of the pressurised operating fluid from the pipe 1 to the pipe 3 is controlled by a solenoid diverter valve 4 which is also connected to a pneumohydraulic actuator, generally indicated 5, of the type described in detail in the previous German application mentioned above and also in the subsequent European Patent Application No. EP-A-0 276 637, again in the name of the same Applicant. In known manner, this actuator includes a barometric capsule 6. A second solenoid valve 7 is interposed between the barometric capsule 6 and a pipe 8 connected to a vacuum source, for example, the intake manifold 9 of the internal combustion engine of the motor vehicle. An electronic processing and control unit 10, typically constituted by a microprocessor, controls the opening and closing of the solenoid valves 4 and 7 according to criteria which will better be explained below, in dependence on monitoring signals provided by sensors W which are associated with the wheels of the motor vehicle and can provide electrical signals (relating to speed and/or acceleration) on the basis of which it is possible to detect the condition in which one or more wheels of the motor vehicle run the risk of locking and starting to slip on the ground. Further sensors, not illustrated, such as a pressure sensor for detecting the pressure in a chamber within the barometric capsule 6, as described in the prior patent applications mentioned above, may also be connected to the unit 10.

When the vehicle is travelling normally (absence of braking), the master cylinder 2 to which the pipe 1 is connected is not activated and the solenoid valve 4 is in a condition in which it interconnects the pipes 1 and 3 and disconnects the pipe 3 from the pneumohydraulic actuator 5.

When the driver operates the brakes of the vehicle, the pressure generated by the master cylinder 2 is propagated towards the pipe 3 through the solenoid valve 4 and causes the operation of the braking members. If the unit 10 does not defect (on the basis of the information provided by the sensors W) any tendency of one or more wheels of the motor vehicle to lock, the anti-lock mode of operation is not made operative by the system.

As soon as the unit 10 detects a condition of incipient locking of one or more wheels of the motor vehicle, however, it operates the solenoid valve 4 so as to disconnect the pipe 3, and hence the braking members, from the pipe 1 and interconnect the pipe 3 and the penumohydraulic actuator 5. The unit 10 pilots the pneumohydraulic actuator 5 by means of the solenoid valve 7, in generally known manner, so as firstly to reduce the braking pressure sent to the braking members through the pipe 3, until the deceleration of one or more wheels falls below a predetermined threshold, and then to keep the braking pressure constant for a certain period of time, for example, until the sensors W indicate that the wheels have started to rotate with a predetermined minimum angular acceleration. From this condition, the electronic processing and control unit 10 causes the braking pressure sent through the pipe 3 to the braking members to be increased again by the pneumohydraulic actuator 5. If another incipient locking condition arises, the control unit 10 causes a further controlled reduction of the braking pressure by means of the pneumohydraulic actuator 5, followed by another constant-pressure stage and a further stage of renewed pressure increase.

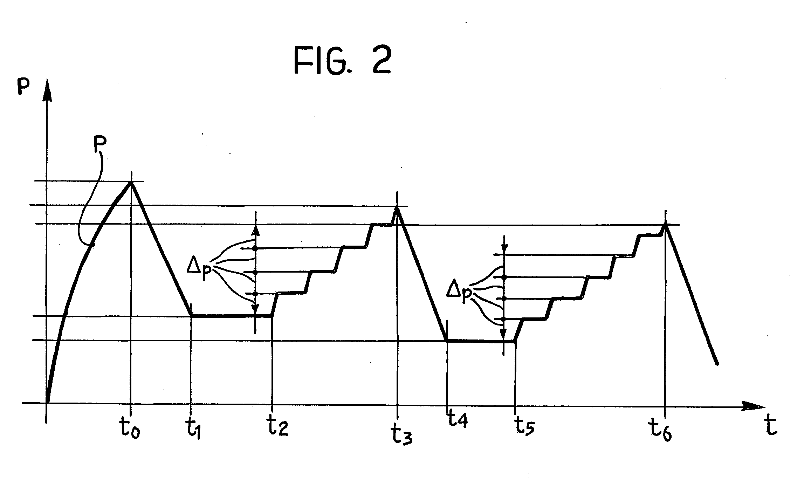

Figure 2 shows by way of example, a curve of the braking pressure P as a function of the time t shown on the abscissa. In this graph, the time indicated $t_0$ is that at which the first incipient locking condition occurs and is therefore followed by a stage of controlled pressure reduction till a time $t_1$. In Figure 2, this pressure reduction is linear, although in practice this represents only an approximation.

Still with reference to Figure 2, from the time $t_1$ and up to a subsequent time $t_2$, the braking pressure P is kept constant. From the time $t_2$, the braking pressure is increased again according to a temporal law with stepped pressure increments of constant size and frequency. The time indicated $t_3$ in Figure 2 is that at which a new incipient locking condition occurs, and hence that at which a further stage of controlled pressure reduction ending at the time $t_4$ is started. The pressure P also exhibits a linear decrease in this stage, although this is in fact only an approximation of what generally occurs in reality. The pressure is then kept constant until a time $t_5$ and is then increased again by the same temporal law with stepped increments as was followed during the period between the times $t_2$ and $t_3$. The pressure increase continues until the time $t_6$ at which, according to the graph of Figure 2, a new incipient locking condition arises and another stage of controlled pressure reduction is started.

Generally, if the road-holding conditions of the wheels on the road surface do not improve during the course of the braking, the values reached by the braking pressure at the end of the stages of controlled increase (that is, at the times $t_3$, $t_6$, etc. in Figure 2) gradually become slightly lower. Moreover, the braking pressure may reach a final value greater than the final value reached in the preceding cycle, as a result of improved road-holding conditions during a particular stage of controlled increase.

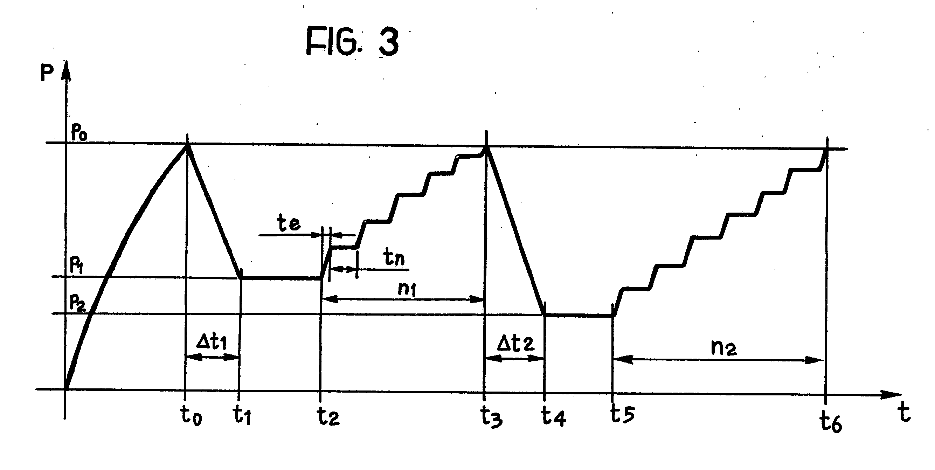

Figure 3 shows a graph similar to that of Figure 2 but relating to a situation, which is very unlikely in reality, in which the final values of the braking pressure at the end of the stages of controlled increase are all equal to each other and equal to the value $P_0$ assumed by the braking pressure at the time $t_0$ when the first stage of controlled pressure reduction was started. As just stated, the situation to which the graph of Figure 3 relates is unlikely to occur in practice, but it can be taken as a reference for some remarks which will enable a better understanding of the manner in which the system according to the invention operates.

From an observation of Figure 3, the following equation can rapidly be defined:

$$n_1 : n_2 = \Delta t_1 : \Delta t_2 \qquad (1)$$

where $n_1$ and $n_2$ are the numbers of pressure increases achieved between $t_2$ and $t_3$ and between $t_5$ and $t_6$ respectively, whilst $\Delta t_1$ and $\Delta t_2$ are the durations of the stages of controlled reduction of the braking pressure, that is, the intervals $t_1 - t_0$ and $t_4 - t_3$ respectively.

The following equation can be derived directly from that given above:

$$n_2 = n_1 \cdot \frac{\Delta t_2}{\Delta t_1} \qquad (2)$$

Equation (2) given above indicates that, in the situation to which the graph of Figure 3 refers, the number of pressure steps for each cycle is equal to the product of the number of steps of the preceding cycle and the ratio between the duration of the last period of controlled pressure reduction and the duration of the penultimate period of pressure reduction.

Equation (2) can therefore be generalised as follows:

$$n_i = n_{i-1} \cdot \frac{\Delta t_i}{\Delta t_{i-1}} \qquad (3)$$

Equation (3) given above is only true for the "stationary" situation to which the graph of Figure 3 relates. For actual cases, it does not apply exactly but can conveniently be used to estimate with a good degree of approximation the number of pressure steps which must be obtained on average in any cycle of anti-lock braking before a further incipient wheel-locking condition arises.

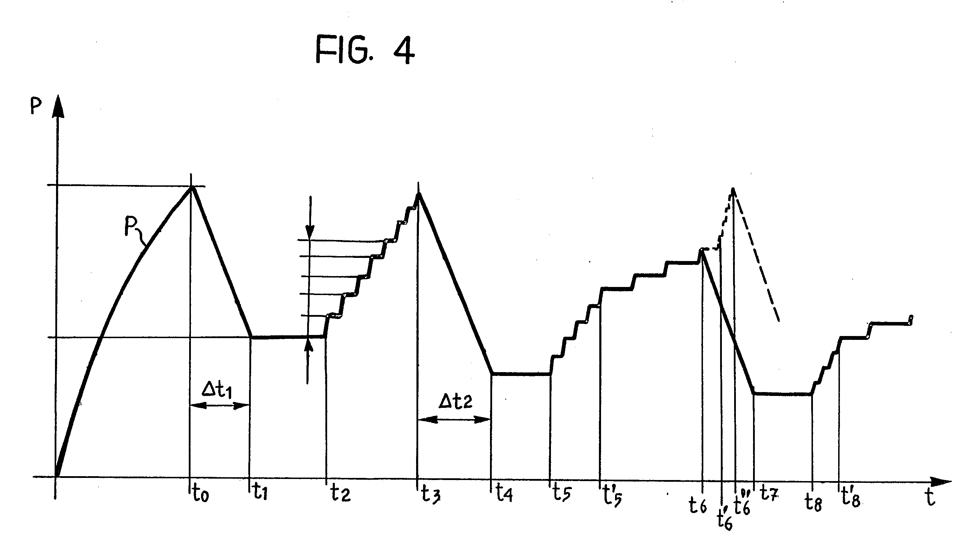

The operation of the system according to the invention will now be described with reference to Figure 4, and in the light of the remarks considered above.

During the course of braking, as soon as the processing and control unit 10 detects an incipient wheel-locking condition, it causes a controlled reduction of the braking pressure by means of the solenoid valves 4 and 7 and the pneumohydraulic actuator 5, as shown starting from the time $t_0$ in Figure 4. This reduction continues until a time $t_1$ from which the braking pressure is kept constant. Starting from a subsequent time $t_2$, the unit 10 causes the braking pressure to increase again, according to a temporal law with equal stepped increments of predetermined size and frequency. The increase in the braking pressure continues until a time $t_3$ at which the unit 10 detects a new incipient wheel-locking condition and consequently causes a further stage of controlled reduction of the braking pressure, until the time $t_4$. The pressure is then kept constant until a time $t_5$. In the meantime, the unit 10 calculates, on the basis of the equation (3) given above, the estimated total number of pressure steps to be obtained during the next braking-pressure-increase stage. On the basis of the remarks considered above, this estimated total value is only approximate, although it is probably affected by a small margin of error. The number thus calculated therefore represents only the (very) probable number of pressure steps which will be achieved during the next braking-pressure-increase stage before the wheels start to lock again.

The unit 10 of the system according to the invention is arranged so that, starting from the second pressure-reduction-maintenance-increase cycle, the increase in pressure takes place very quickly to begin with and then more slowly. With reference to Figure 4, this takes place as follows.

Starting from the time $t_5$, the unit 10 increases again the braking pressure by an initial number of pressure steps with (for example) the same size of increment $\Delta P$ and the same frequency as the pressure steps in the period between $t_2$ and $t_3$.

This initial number of pressure steps is a predetermined fraction, falling between 50% and 100% (for example, 60%), of the number obtained by the application of equation (3) above. By virtue of this initial number of pressure steps, the braking pressure quickly returns to a fairly high value (at the time $t'_5$ of Figure 4). The braking pressure is then increased again by means of a subsequent number of steps with a lower frequency and (for example) the same size of increment $\Delta p$ as the previous steps. With reference to Figure 4, from the time $t'_5$, there is hence a stage during which the braking pressure increases relatively slowly.

If a new incipient wheel-locking condition arises, the unit 10 causes another controlled reduction of the braking pressure (time $t_6$ in Figure 6).

It should be noted that the total number of pressure steps actually achieved between the times $t_5$ and $t_6$ will generally be (slightly) different from the estimated number previously calculated by the unit 10 on the basis of equation (3). However, if the initial number of steps (that is, the higher-frequency steps) is a fraction which is not too close to 100% of the calculated estimated number, the reapplication of the braking pressure during all the anti-lock cycles of brake-release and brake-reapplication takes place rapidly to begin with and then relatively slowly.

Moreover, it may be that another incipient wheel-locking condition does not develop during a pressure-increase stage, after a number of pressure steps equal to the estimated value calculated by the unit 10 on the basis of equation (3) has been achieved. This may be the case, for example, if the road-holding conditions of the wheels have improved in the meantime so that they tolerate the application of a greater braking pressure without tending to lock again. In this event, the unit 10 of the system according to the invention brings about a further series of pressure-increase steps of very high frequency, for example, equal to or greater than the frequency of the initial steps. In such a situation, the braking pressure would exhibit the curve illustrated by the broken line in Figure 4 in the period after the time $t_6$: starting from the time indicated $t'_6$, the unit initiates the new set of high-frequency pressure increases and, at the time indicated $t''_6$, a new incipient wheel-locking condition arises.

During each stage in which the braking pressure is increased again, the second set of pressure steps (that is, those at a lower frequency) may be timed at a frequency which is not necessarily constant for all the cycles, and may be made independent of the number of low-frequency steps to be carried out according to the estimate calculated by the equation (3).

## Claims

1. An anti-lock braking system for a motor vehicle, comprising:
sensor means (W) for providing electrical signals indicative of the rate of rotation of at least one monitored wheel of the motor vehicle,
electrically-controlled fluid actuator means (4-9) for increasing and reducing the braking pressure applied to the braking elements of the vehicle, and
an electronic processing and control unit (10) which is connected to the sensor means (W) and causes one or more anti-lock braking cycles when the at least one monitored wheel is in conditions of incipient locking, the unit 10 causing in succession, in each of the cycles:
- a controlled reduction of the braking pressure when the at least one monitored wheel is in a condition of incipient locking,
- the holding of the pressure at a constant value until the acceleration of the wheel exceeds a minimum positive threshold, and
- the increase of the braking pressure again according to a predetermined temporal law,
characterised in that the electronic processing and control unit (10) is arranged to cause, during the stage in which the braking pressure is increased again in each cycle after first:
- an initial, rapid pressure increase of an amount calculated on the basis of the total increase achieved in the preceding cycle and the durations of the last and penultimate periods of controlled pressure reduction, and
- a subsequent, slower increase in the braking pressure.

2. A system according to Claim 1, in which the electronic processing and control unit (10) is arranged to increase the braking pressure again according to a temporal law with stepped increments of predetermined characteristics in each cycle,
characterised in that the unit (10) is arranged so that, starting from the second cycle, it brings about:
an initial number of pressure steps equal to a predetermined fraction of the number obtained by multiplying the total number of actual steps in the preceding cycle by the ratio between the durations of the last and penultimate periods of controlled reduction of the braking pressure, and
a subsequent number of pressure steps at a lower frequency.

3. A system according to Claim 2, characterised in that the initial number of steps is a fraction falling between 50% and 100% of the number obtained by multiplying the total number of pressure steps in the

5

preceding cycle by the ratio between the durations of the last and penultimate pressure-reduction periods.

4. A system according to Claim 3, characterised in that the predetermined fraction is substantially equal to 60%.

5. A system according to any one of Claims 2 to 4, characterised in that the pressure steps have increments of the same size ($\Delta$ p).

6. A system according to any one of Claims 2 to 5, characterised in that the electronic processing and control unit (10) is arranged so that, starting from the second cycle of intervention, it provides for a further number of pressure steps of a higher frequency than the pressure steps of the initial and second numbers of steps, when a new condition of incipient locking of the wheels does not arise after a total number of steps equal to the estimated number calculated in the manner defined above has been effected.

7. A system according to Claim 6, characterised in that the steps of further set of pressure steps have increments of the same size as the previous pressure steps.

8. A system according to any one of Claims 2 to 7, characterised in that the electronic processing and control unit (10) is arranged so that, during each stage in which the braking pressure is increased again, the frequency of the said subsequent numberof pressure steps is determined in inverse proportion to the number of subsequent pressure steps envisaged.

6

# FIG. 1

EP 0 371 932 A2

FIG. 2

FIG. 3

EP 0 371 932 A2

# FIG. 4

EP 0 371 932 A2